# EUROPÄISCHE PATENTANMELDUNG

(11) **EP 1 574 631 A2**
(43) Veröffentlichungstag der Anmeldung: **14.09.2005**
(21) Anmeldenummer: 04005698.8
(22) Anmeldetag: 10.03.2004
(51) Int. Cl.: E04B 2/74

(54) **Eckverbinder**

(30) Priorität: 27.02.2004 DE 0403223 U
(71) Anmelder: Mock, Käthe, 53804 Much (DE)
(72) Erfinder: Mock, Marc Oliver, 53804 Much (DE)
(74) Vertreter: Müller-Gerbes, Margot

(57) **Zusammenfassung**

Die Erfindung betrifft einen Eckverbinder (1) zur Ausbildung einer Eckverbindung zwischen zwei winklig zueinander angeordneten Profilstäben (2), wobei der Eckverbinder (1) im wesentlichen L-förmig mit zwei Schenkeln (10,11) ausgebildet ist und auf die freien Enden (100,110) der Schenkel (10,11) die Profilstäbe (2) endseitig aufschiebbar sind, wobei der Eckverbinder (1) im Bereich seiner Schenkel (10,11) mit Einstecköffnungen (12,13) ausgebildet ist, in die Kupplungsteile (4,5) zum Verbinden mehrerer Eckverbinder (1) miteinander einsteckbar sind.

## Beschreibung

Die Erfindung betrifft einen Eckverbinder zur Ausbildung einer Eckverbindung zwischen zwei winklig zueinander angeordneten Profilstäben, wobei der Eckverbinder im wesentlichen L-förmig mit zwei Schenkeln ausgebildet ist und auf die freien Enden der Schenkel die Profilstäbe endseitig aufschiebbar sind.

Derartige Eckverbinder sind vielfältig bekannt und werden beispielsweise für die Erstellung von Stellwänden, Präsentationssystemen, Bilderrahmen und dergleichen mehr verwendet, bei denen Profilstäbe über Eck zu einem gewünschten Gebilde verbunden werden.

Aufgabe der Erfindung ist es, einen Eckverbinder der eingangs genannten Art vorzuschlagen, der bei einfacher Herstellung in möglichst flexibler und universeller Weise die Ausbildung von Eckverbindungen ermöglicht und zum Einsatz innerhalb eines modularen Systems geeignet ist.

Zur Lösung der gestellten Aufgabe schlägt die Erfindung vor, daß der Eckverbinder im Bereich seiner Schenkel mit Einstecköffnungen ausgebildet ist, in die Kupplungsteile zum Verbinden mehrerer Eckverbinder untereinander einsteckbar sind.

Erfindungsgemäß wird durch das Vorsehen von Kupplungsteilen zum Verbinden mehrerer Eckverbinder untereinander ermöglicht, die einzelnen für die Ausbildung von Eckverbindungen benötigten Eckverbinder untereinander zu kuppeln bzw. aneinanderzufügen, so daß die Erstellung von vielfältigen Raumformen im Namen eines modularen Systems z. B. für die Erstellung von Warenpräsentationssystemen, Bilderrahmen und dergleichen mehr möglich wird.

Vorteilhafte Ausgestaltungen und Weiterbildungen der Erfindung sind Gegenstand der Unteransprüche.

In einer bevorzugten Ausführungsform der Erfindung sind die Einstecköffnungen auf der Seite der Schenkel ausgebildet, die dem zwischen den Schenkeln eingeschlossenen Winkel abgewandt ist.

Die Einstecköffnungen des erfindungsgemäßen Eckverbinders sind vorzugsweise in Längserstreckung der Schenkel gesehen hintereinander und in gleichen Abständen auf diesen angeordnet, so daß eine modulare Austauschbarkeit gegeben ist.

Darüber hinaus kann vorgesehen sein, daß mindestens eine der Einstecköffnungen auf jedem Schenkel mit Rastmitteln zum verrastenden Einstecken eines Kupplungsteiles ausgebildet ist.

Zur Schaffung einer stabilen Eckverbindung können über die Schenkel des erfindungsgemäßen Eckverbinders axial vorstehende Kernvorsprünge zum Eingreifen in eine Hohlkammer des Profilstabes vorgesehen sein, wobei im Bereich der freien Enden der Schenkel zwischen diesen und dem jeweiligen Kernvorsprung eine umlaufende Nut zum stirnseitigen Einstecken des Profils ausgebildet wird. Auf diese Weise wird eine besonders feste und verbindungssteife Verbindung zwischen dem Profilstab und dem Eckverbinder ermöglicht.

Um eine möglichst flexible und kostengünstige Herstellung des erfindungsgemäßen Eckverbinders zu ermöglichen, besteht dieser gemäß einem Vorschlag der Erfindung aus zwei Verbinderhälften, die zu einem Eckverbinder zusammenfügbar sind, z. B. zusammensteckbar sind. Auf diese Weise ist es möglich, den erfindungsgemäßen Eckverbinder z. B. aus Aluminiumdruckguß oder auch aus einem thermoplastischen Kunststoff im Spritzgußverfahren großtechnisch herzustellen.

Zur Ausbildung von z. B. Bilderrahmen mittels des erfindungsgemäßen Eckverbinders kann dieser im Übergangsbereich zwischen den beiden Schenkeln eine Ausnehmung zur Aufnahme eines Tragseiles aufweisen, so daß ein aus Profilstäben und den erfindungsgemäßen Eckverbindern erstellter Bilderrahmen an einem solchen Tragseil aufgehangen werden kann.

Zur weiteren Steigerung der modularen Verbindbarkeit des erfindungsgemäßen Eckverbinders können die Ausnehmungen zur Aufnahme eines Tragseiles im übrigen auch so gestaltet sein, daß darin auch ein Kupplungsteil zum Verbinden mehrerer Eckverbinder untereinander befestigbar ist.

Die im Rahmen der Erfindung vorgesehenen Kupplungsteile zum Verbinden mehrerer Eckverbinder können verschiedene Gestalt aufweisen.

So ist nach einem Vorschlag der Erfindung vorgesehen, daß als Kupplungsteil ein Kupplungsstift vorgesehen ist, der jeweils mit einem seiner Enden in einer Einstecköffnung eines Eckverbinders einsteckbar ist. Der Kupplungsstift kann hierbei mindestens zwei Enden zum Einstecken in Einstecköffnungen von Eckverbindern aufweisen, darüber hinaus aber auch mehr als zwei Einstecköffnungen, etwa wenn er etwa kreuzförmig mit vier in einer gemeinsamen Ebene sich erstreckenden und jeweils einen Winkel von 90° zwischen benachbarten Enden einschließenden Enden ausgebildet ist.

Nach einem weiteren Vorschlag der Erfindung kann als Kupplungsteil auch eine Kupplungsplatte vorgesehen sein, auf deren Oberseite und/oder Unterseite Kupplungsbolzen vorstehen, die in die Einstecköffnungen von Eckverbindern einsteckbar sind.

Eine solche Kupplungsplatte kann verschiedene Gestaltungen aufweisen, gemäß einem Vorschlag der Erfindung wird sie von zwei konzentrisch angeordneten und durch Speichen miteinander verbundenen Ringen gebildet. Auf dem Ring mit dem größeren Durchmesser werden sodann Kupplungsbolzen zum Einstecken in korrespondierende Einstecköffnungen des Eckverbinders und auf dem Ring mit dem kleineren Durchmesser weitere Kupplungsbolzen zum Einstecken in hierzu ebenfalls korrespondierende Einstecköffnungen des Eckverbinders angeordnet. Da somit jeder Eckverbinder mit mindestens zwei Kupplungsbolzen mit der Kupplungsplatte verbunden wird, wird gleichzeitig auch eine Verdrehsicherung der solchermaßen aneinander befestigten Eckverbinder bewirkt.

Es ist sowohl möglich, die Kupplungsplatte, beispielsweise bestehend aus zwei konzentrisch angeordneten und durch Speichen verbundenen Ringen mit integral ausgebildeten Kupplungsbolzen zu versehen, wie auch die Kupplungsplatte mit entsprechenden Bohrungen für die Aufnahme von Kupplungsbolzen zu versehen, in die letztere lediglich bei Bedarf eingesetzt und dort befestigt werden. Die Befestigung kann beispielsweise durch Einklemmen oder auch durch Einschrauben oder dergleichen mehr erfolgen.

Weitere Ausgestaltungen und Einzelheiten der Erfindung werden nachfolgend anhand von Ausführungsbeispielen in der Zeichnung näher erläutert. Es zeigen:
- Figur 1: in perspektivischer Darstellung einen Eckverbinder gemäß der Erfindung,
- Figur 2: in perspektivischer Darstellung den Eckverbinder gemäß Figur 1 aus einem anderen Blickwinkel,
- Figuren 3a bis 3d: verschiedene Ansichten einer Verbinderhälfte, die mit einer komplementär ausgebildeten Verbinderhälfte zu einem Eckverbinder gemäß Figuren 1 und 2 zusammensteckbar ist,
- Figur 4: in perspektivischer Darstellung eine Kupplungsplatte als Ausführungsbeispiel für ein Kupplungsteil,
- Figur 5: in perspektivischer Darstellung den Einsatz der Kupplungsplatte gemäß Figur 4,
- Figur 6: mehrere mittels einer Kupplungsplatte gemäß Figur 4 miteinander verbundene Eckverbinder in perspektivischer Darstellung,
- Figur 7a: die Aufsicht auf ein Kupplungsbolzenteil,
- Figur 7b: den Schnitt entlang der Schnittlinie A-A in Figur 7a,
- Figur 8a: die Aufsicht auf ein weiteres Kupplungsbolzenteil,
- Figur 8b: den Schnitt entlang der Linie A-A in Figur 8a,
- Figur 9: in perspektivischer Darstellung eine weitere Ausführungsform der Erfindung,
- Figur 10: beispielhaft den Querschnitt eines Profilstabes zum Einsatz mit den erfindungsgemäßen Eckverbindern,
- Figur 11: beispielhaft einen unter Einsatz von erfindungsgemäßen Eckverbindern erstellten Bilderrahmen.

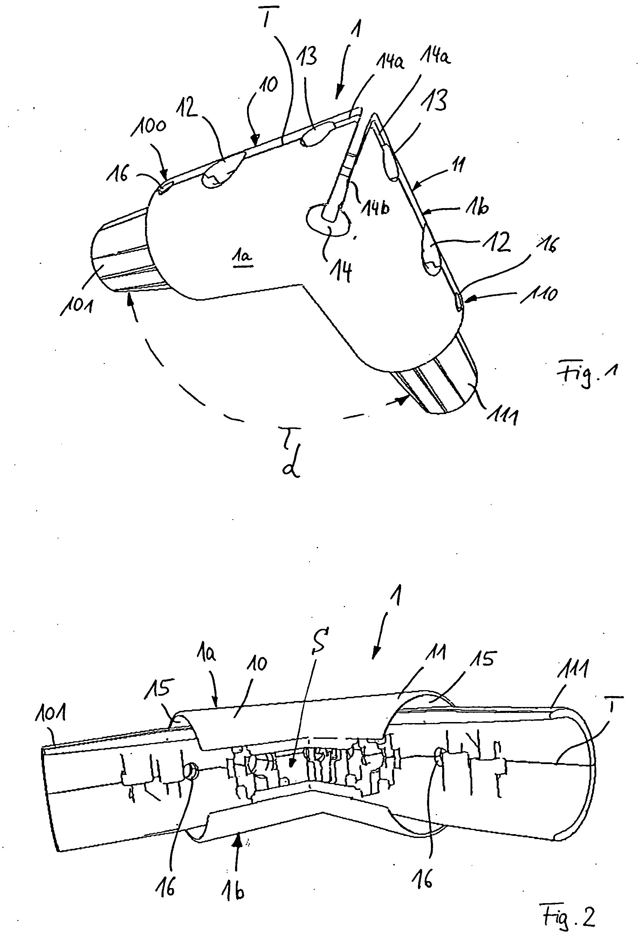

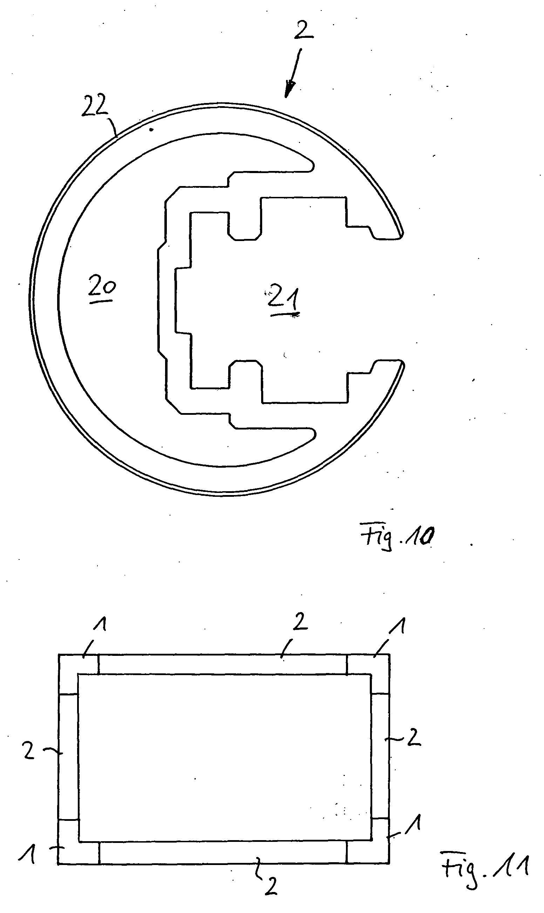

In der Figur 10 ist ein Ausführungsbeispiel eines Profilstabes 2 zur Ausgestaltung von Warenpräsentationssystemen, Bilderrahmen und dergleichen mehr dargestellt. Der Profilstab 2 weist einen kreisförmigen Grundquerschnitt mit einer dementsprechend zylindrischen Mantelfläche 22 sowie eine innenliegende Hohlkammer 20 und eine über einen Längsschlitz von der Außenseite her zugängliche hinterschnittene Nut 21 auf, innerhalb derer beispielsweise der Randbereich eines zu halternden Bildes, der Randbereich einer zu halternden Präsentationswand und dergleichen mehr angeordnet werden kann, wobei dies gegebenenfalls unter Zuhilfenahme weiterer hier nicht dargestellter und in die Nut 21 einsteckbarer Profile erfolgen kann. Um mehrere derartige Profilstäbe 2 in winkliger Ausrichtung zueinander im Eckbereich zu verbinden, ist ein Eckverbinder 1 vorgesehen, der aus den Figuren 1 und 2 in näheren Einzelheiten ersichtlich ist.

Dieser Eckverbinder 1 weist einen dem kreisförmigen Grundquerschnitt des Profilstabes 2 angepaßte Außengestaltung auf, wobei diese jedoch stets in Anpassung an den vorgesehenen Profilstab 2 variiert werden kann.

In jedem Falle ist der Eckverbinder 1 etwa L-förmig ausgebildet und umfaßt zwei einen Winkel α von 90° einschließende Schenkel 10, 11, die jeweils ein freies Ende 100, 110 aufweisen. Innenseitig ist ein sich über beide Schenkel 10, 11 durchgängig erstreckender Schlitz S vorgesehen.

Im Bereich der jeweiligen freien Enden 100, 110 sind axial über die Schenkel 10, 11 vorstehende Kernvorsprünge 101, 111 vorgesehen, die beim endseitigen Aufschieben von Profilstäben 2 auf die freien Enden 100, 110 des Eckverbinders 1 in die Hohlkammern 20 der Profilstäbe 2 formschlüssig eingreifen.

Aus der Darstellung gemäß Figur 2 erkennt man ferner im Bereich der freien Enden 100, 110 der beiden Schenkel 10, 11 zwischen diesen und den jeweils axial darüber hinaus vorstehenden Kernvorsprüngen 101, 111 eine umlaufende, hier etwa ringförmige Nut 15, in welche der Profilstab 2 mit seiner Mantelfläche 20 eingeschoben wird, während der jeweilige Kernvorsprung 101, 111 in die Hohlkammer 20 des betreffenden Profilstabes 2 eingeführt wird. Auf diese Weise wird eine außerordentlich formstabile und verwindungssteife Verbindung zwischen den Profilstäben 2 und dem Eckverbinder 1 ermöglicht und auf diese Weise eine Eckverbindung zwischen zwei unter einem Winkel von 90° zueinander ausgerichteten Profilstäben 2 bewerkstelligt.

Nachdem die Profilstäbe 2 in der vorangehend beschriebenen Weise endseitig auf die freien Enden 100, 110 der Schenkel 10, 11 des Eckverbinders 1 aufgeschoben und hierbei in die umlaufende Nut 15 eingeführt worden sind, können die Profilstäbe 2 sodann über eine durch eine Bohrung 16 am freien Ende 100, 110 der Schenkel 10, 11 eingeführte, hier jedoch nicht dargestellte Schraube in dieser Position gesichert und am Eckverbinder 1 befestigt werden.

Somit kann beispielsweise ein in der Figur 11 dargestellter Bilderrahmen aus insgesamt vier mit Eckverbindern 1 verbundenen Profilstäben 2 erstellt werden.

Wesentliches Merkmal des in den Figuren 1 und 2 dargestellten Eckverbinders 1 ist es, daß dieser im Bereich seiner beiden Schenkel 10, 11 auf der dem eingeschlossenen Winkel α abgewandten Seite mit Einstecköffnungen 12, 13 ausgebildet ist, in die in nachfolgend noch näher dargestellter Weise Kupplungsteile eingeführt werden können, um mehrere solcher Eckverbinder miteinander zu verbinden, wodurch die Schaffung eines modularen Systems etwa zur Erstellung von miteinander verketteten Bilderrahmen oder aber auch zur Erstellung von Warenpräsentationssystemen, Absperrwänden, Displays etc. geschaffen werden kann.

Die einzelnen auf den Schenkeln 10, 11 ausgebildeten Einstecköffnungen 12, 13 sind in Bezug zum jeweiligen Schenkel 10 bzw. 11 in gleichen Positionen und gleichen Abständen voneinander angeordnet, so daß ein modulares Aneinanderfügen mehrerer Eckverbinder mit stets gleichen Abständen ermöglicht ist.

Die näher zum freien Ende 100 bzw. 110 der Schenkel 10, 11 hin positionierten Einstecköffnungen 12 sind in nachfolgend noch näher geschilderter Weise mit Rastmitteln ausgebildet, so daß hierin eingesteckte Kupplungsteile verrastend einsteckbar sind, während die beiden mit größerem Abstand von den jeweiligen freien Enden 100, 110 angeordneten Einstecköffnungen 13 bevorzugt ohne solche Rastmittel ausgebildet sind.

Auf jedem Schenkel 10, 11 sind die beiden Einstecköffnungen 12, 13 nicht nur in gleichen Abständen voneinander, sondern auch in axialer Richtung der Schenkel gesehen hintereinander angeordnet.

Zur möglichst einfachen Herstellung derartiger aus den Figuren 1 und 2 ersichtlicher Eckverbinder wird vorgeschlagen, diesen aus zwei Verbinderteilen 1a, 1 b herzustellen, welche komplementär zueinander ausgebildet sind und entlang einer durch die Mittelebene des Eckverbinders 1 verlaufenden Trennfuge T zu dem in den Figuren 1 und 2 ersichtlichen Eckverbinder 1 zusammengefügt werden können.

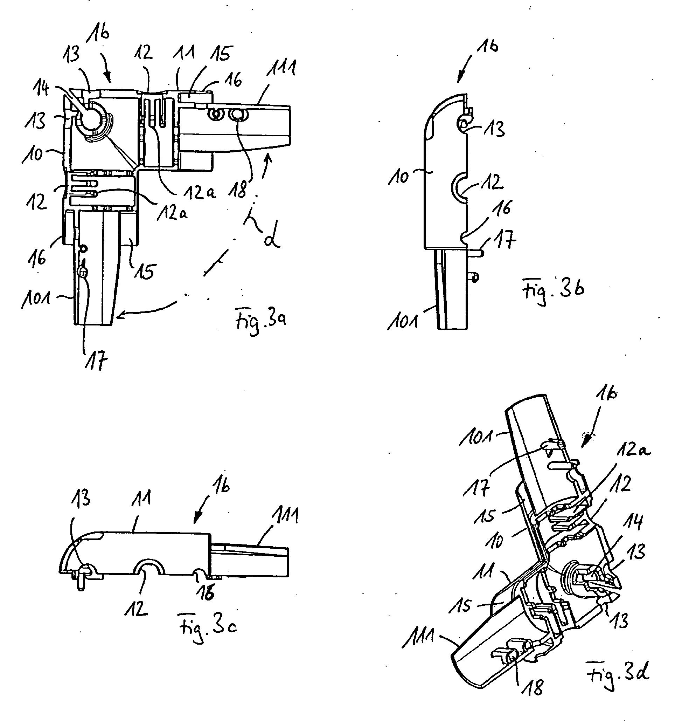

Ein solches Verbinderteil 1b ist stellvertretend in den Figuren 3a bis 3d dargestellt, wobei die jeweils in einem Verbinderteil 1b wie auch im komplementär dazu ausgebildeten Verbinderteil 1a jeweils nur hälftig vorhandenen Funktionsmerkmale, wie Einstecköffnungen 12, 13, Kernvorsprünge 101, 111 etc. zum leichteren Verständnis auch im jeweiligen Verbinderteil 1b mit den gleichen Bezugsziffern wie am fertigen Verbinder 1 dargestellt sind.

Aus der Darstellung des Verbinderteils 1b gemäß den Figuren 3a bis 3d ist der innere Aufbau des Eckverbinders 1 näher ersichtlich. So sind mit Bezugsziffer 12a unterhalb der Einstecköffnung 12 vorgesehene und koaxial zu dieser angeordnete Rastfinger bezeichnet, die beim Einstecken eines entsprechend ausgebildeten Kupplungsteiles ein verrastendes Einstecken desselben in der Einstecköffnung 12 bewirken.

Ferner weist das Verbinderteil 1b im Bereich seines Kernvorsprunges 101 vorstehende Klemmzapfen 17 und im Bereich des Kernvorsprunges 111 komplementär hierzu ausgebildete Klemmöffnungen 18 auf, so daß beim Zusammenstecken von entsprechend komplementär ausgebildeten Verbinderteilen 1 a, 1b die aus den Figuren 1 und 2 ersichtliche Ausbildung des Eckverbinders 1 mit der Trennfuge T auf einfache Weise möglich wird.

Die Verbinderteile 1 a, 1b können beispielsweise aus einem thermoplastischen Kunststoff im Spritzgußverfahren oder auch aus Aluminium im Druckgußverfahren hergestellt werden.

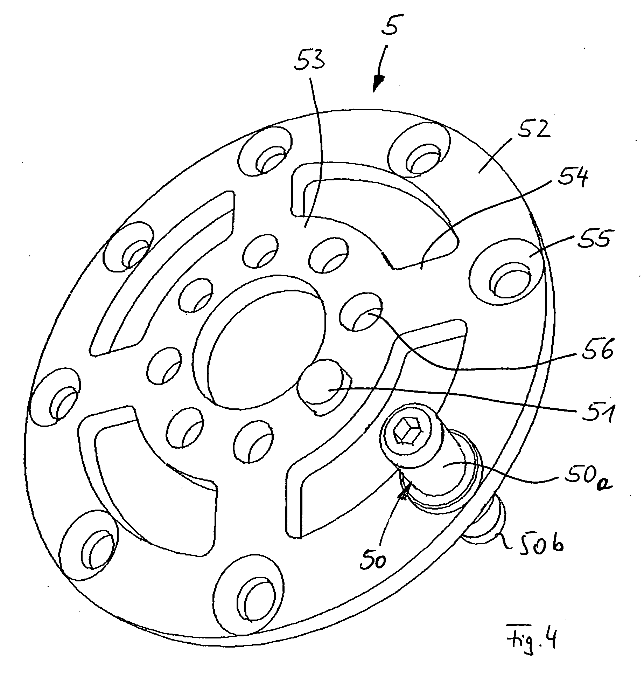

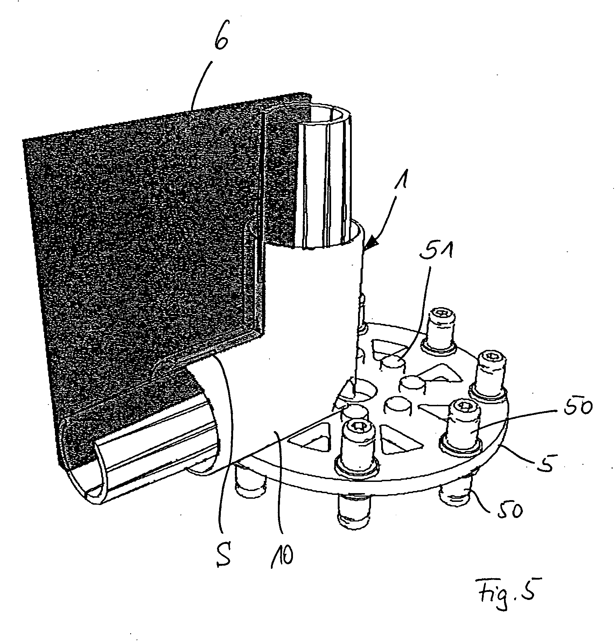

Aus der Figur 4 ist eine Ausführungsform eines Kupplungsteiles in Gestalt einer Kupplungsplatte 5 mit zwei konzentrisch zueinander angeordneten Ringen 52, 53 dargestellt, wobei die konzentrisch zueinander angeordneten Ringe 52, 53 mittels radialer Speichen 54 miteinander verbunden sind. Auf dem äußeren, d.h. größeren Durchmesser aufweisenden Ring 52 sind Bohrungen 55 ausgebildet, in welchen Kupplungsbolzen 50 befestigt werden können, während auf dem inneren Ring mit kleinerem Durchmesser 53 Bohrungen 56 ausgebildet sind, in welchen Kupplungsbolzen 51 befestigbar sind, die ebenfalls wahlweise nur auf der Ober- oder Unterseite oder auf beiden Seiten der Kupplungsplatte 5 vorstehen. Die radialen Abstände zwischen den benachbarten Kupplungsbolzen 50, 51 sind so gewählt, daß sie mit den Abständen der Einstecköffnungen 12, 13 auf jedem Schenkel 10, 11 des Eckverbinders 1 übereinstimmen, so daß es möglich wird, einen Eckverbinder 1 z.B. im Bereich seines Schenkels 10 auf eine solche Kupplungsplatte 5 aufzusetzen und mittels der Kupplungsbolzen 50, 51 zu befestigen, siehe hierzu Figur 5. Hierbei greift der entsprechende Kupplungsbolzen 50 auf dem äußeren Ring 52 in die mit Rastmitteln ausgebildete Einstecköffnung 12 des Eckverbinders, während der auf dem inneren Ring 53 ausgebildete Einsteckbolzen 51 in die Einstecköffnung 13 eingreift.

Auf diese Weise ist es möglich, den Eckverbinder 1 gemäß Darstellung in der Figur 5 auf die Verbinderplatte 5 aufzustecken, wobei dementsprechend auch weitere solche Eckverbinder 1 über diese Verbinderplatte 5 mit dem aus der Figur 5 bereits ersichtlichen Eckverbinder 1 verbunden und an diesem angekuppelt werden können, so daß die Ausbildung von modularen Systemen möglich wird.

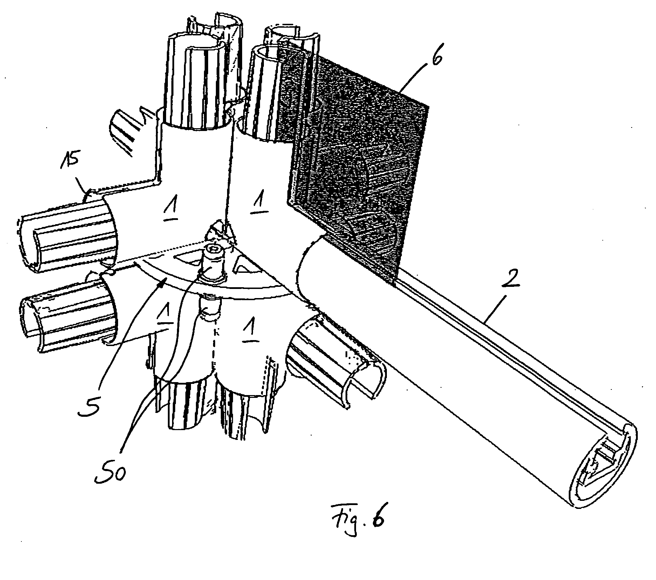

Aus der Darstellung gemäß Figuren 5 und 6 ist beispielsweise ein solches modulares System mit Trennwänden oder Warenpräsentationswänden 6 dargestellt, die jeweils randseitig in Profilstäben 2 und im Eckbereich auch in den die Profilstäbe 2 verbindenden Eckverbindern 1 aufgenommen sind. Die Eckverbinder 1 sind hierzu in an sich bekannter Weise mit einem mit der Einstecknut 21 der zu verbindenden Profilstäbe 2 fluchtenden Schlitz S ausgebildet, in welchem die zu halternde Trennwand 6 randseitig aufgenommen wird.

Aus der Darstellung in der Figur 6 erkennt man eine Vielzahl von Eckverbindern 1 in jeweils unterschiedlicher Orientierung, die allesamt über eine gemeinsame Verbinderplatte 5 unter Verwendung von in die Bohrungen 55, 56 eingesetzten Verbindungsbolzen 50, 51 auf der Oberseite und Unterseite der Verbinderplatte 5 untereinander verbunden und miteinander gekoppelt sind. Auf diese Weise sind vielfältige Variationsmöglichkeiten im Rahmen eines modularen Systems gegeben.

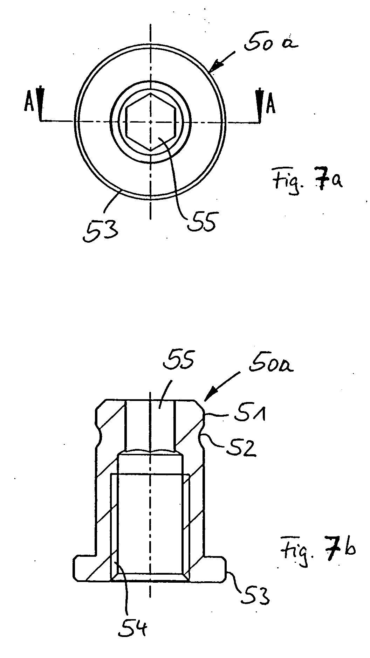

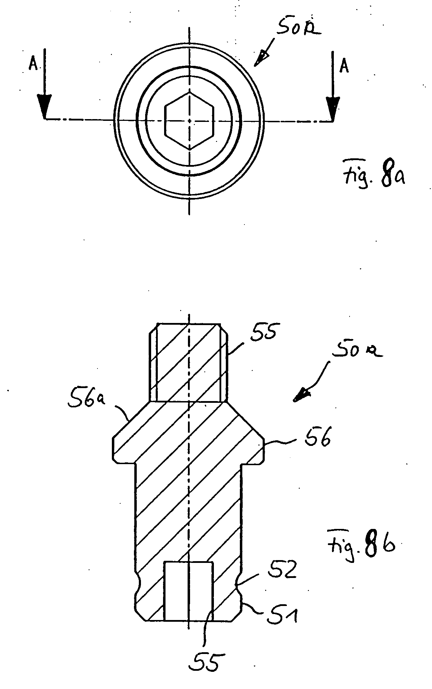

Während die in die Bohrungen 56 einsetzbaren und in die üblicherweise ohne Rastmittel ausgebildeten Einstecköffnungen 13 einsteckbaren Verbindungsbolzen 50 glattflächig und einteilig ausgebildet und beispielsweise klemmend in die Bohrungen 56 eingesetzt sind, sind die auf dem äußeren Ring 52 anbringbaren Verbindungsbolzen 50 bevorzugt zweiteilig ausgebildet, was in näheren Einzelheiten aus der Darstellung in den Figuren 7a bis 8b ersichtlich ist. So ist beispielsweise auf der Oberseite der Verbinderplatte 5 ein erstes Bolzenteil 50a angeordnet, welches in näheren Einzelheiten aus den Darstellungen gemäß Figuren 8a und 8b ersichtlich ist, während auf der Unterseite ein zweites Bolzenteil 50b vorgesehen ist, welches in näheren Einzelheiten aus den Figuren 7a und 7b ersichtlich ist. Diese beiden Bolzenteile 50a, 50b werden zu einem Verbindungsbolzen 50 zusammengefügt, beispielsweise geschraubt.

Das Bolzenteil 50a weist dazu an einem seiner Enden einen Gewindeabschnitt 55 auf, mit welchem es durch die Bohrung 55 der Verbinderplatte 5 hindurchgesteckt wird. An den Gewindeabschnitt 55 schließt sich ein verdickter Mittelbereich 56 mit einer konischen Anlagefläche 56a an, über die eine Zentrierung innerhalb der ebenfalls konisch ausgebildeten Bohrung 55 im Ring 52 erfolgt. Über die Oberseite der Verbinderplatte 5 weiter vorstehend ist sodann ein Einsteckteil 51 mit einer umlaufenden Rastnut 52 vorgesehen, welches beim Aufsetzen eines Eckverbinders 1 in die Einstecköffnung 12 eingeführt wird und im Bereich der umlaufenden Rastnut 52 mit den Rasthaken 12a verrastend in Wirkverbindung tritt.

Demgegenüber weist das Bolzenteil 50b gemäß Darstellung in den Figuren 7a und 7b ebenfalls ein Einsteckteil 51 und eine umlaufende Rastnut 52 entsprechend der Ausbildung im Bolzenteil 50a auf, hieran schließt sich jedoch zu einem Ende hin ein vergrößerter Umfangsbereich 53 an, der als Standfläche auf dem äußeren Ring 52 dient. Ausgehend von der Standfläche erstreckt sich ferner eine zentrale Gewindebohrung 54 in das Innere des Bolzenteiles 50b hinein, in welche der durch die Befestigungsbohrung 55 der Befestigungsplatte 5 hindurchgesteckte Gewindeabschnitt 55 des Bolzenteiles 50a eingeschraubt wird, was mit Hilfe von zwei an den gegenüberliegenden Enden ausgebildeten Innensechskantbohrungen 55 bei beiden Bolzenteilen 50a, 50b bewirkt werden kann.

Durch dieses Zusammenschrauben der Bolzenteile 50a, 50b in einer Bohrung 55 des äußeren Ringes 52 wird sodann ein beidseits über die Verbinderplatte 5 oberseitig und unterseitig vorstehender Verbindungsbolzen 50 geschaffen, so daß im Bereich der Oberseite und der Unterseite der Verbinderplatte 5 je ein Eckverbinder im Bereich seiner Einstecköffnungen 12 hier aufgesteckt und verrastend befestigt werden kann.

Der demgegenüber in die entsprechende Einstecköffnung 13 eingreifende, dort jedoch nicht verrastende Verbindungsbolzen 51 dient lediglich als zusätzliche Fixierung sowie als Verdrehsicherung für den auf der Verbinderplatte 5 in der vorangehend beschriebenen Weise befestigten Eckverbinder 1.

Durch entsprechende Auswahl der Belegung von Bohrungen 56, 55 mit Verbindungsbolzen 50, 51 können mit ein und derselben Verbinderplatte 5 unterschiedlichste Verbindungen mittels an dieser Verbinderplatte 5 befestigter Eckverbinder ausgebildet werden.

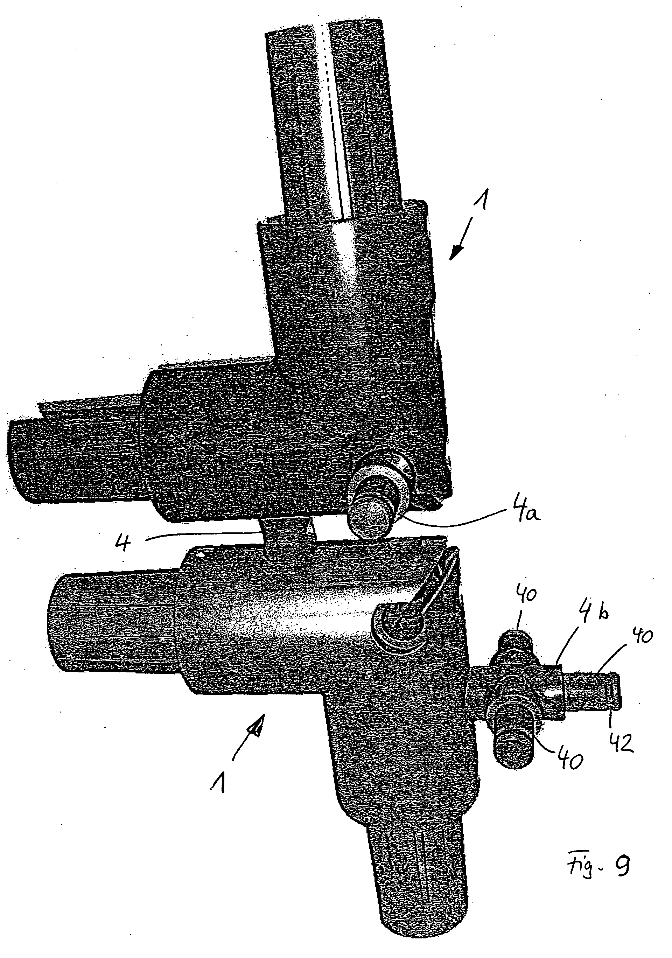

Eine weitere Möglichkeit der Verbindung mehrerer Eckverbinder 1 untereinander ist in der Figur 9 dargestellt. Hierbei werden zwei Eckverbinder 1 in spiegelbildlicher Anordnung zueinander über einen Kupplungsstift 4 als Kupplungsteil miteinander verbunden, welcher an jedem seiner freien Enden eine Kontur entsprechend den Bezugsziffern 51, 52 des Bolzenteiles 50a gemäß Figur 8b aufweist und von daher ebenfalls in einer Einstecköffnung 12 jedes Eckverbinders 12 verrastend befestigbar ist. Beispielhaft ist darüber hinaus ein weiterer Verbinderbolzen 4b dargestellt, der insgesamt vier kreuzförmig zueinander angeordnete Einsteckteile 40 mit umlaufenden Rastnuten 42 aufweist, so daß in entsprechender Ausrichtung weitere Eckverbinder angeordnet werden können.

Sollen mittels der vorangehend beschriebenen Eckverbinder 1 beispielsweise Bilderrahmen erstellt werden, so weisen die Eckverbinder 1 bevorzugt im Übergangsbereich zwischen den beiden Schenkeln 10, 11 eine senkrecht zur Bohrungsachse der Einstecköffnungen 12, 13 verlaufende Ausnehmung 14 auf, in welche beispielsweise ein Tragseil mit einem verdickten Ende eingeführt werden kann. An zwei in den beiden oberen Ecken eines Rahmens ausgebildeten Eckverbindern 1 kann sodann ein solches Tragseil jeweils mit einem seiner verdickten Enden befestigt werden, so daß an diesem Tragseil der unter Einsatz der erfindungsgemäßen Eckverbinder 1 ausgebildete Bilderrahmen in an sich bekannter Weise aufgehangen werden kann. Zur Führung des Tragseiles können überdies Schlitze 14a, 14b im Eckbereich des Eckverbinders 1 ausgebildet sein.

Der Darstellung gemäß Figur 9 ist darüber hinaus entnehmbar, daß auch die Ausnehmung 14 wiederum derart ausgestaltet sein kann, daß Kupplungsteile, etwa Verbinderbolzen 4a gemäß Darstellung in der Figur 9 hier verrastend eingesteckt werden können, so daß eine Verbindung von zwei parallel zueinander ausgerichteten Eckverbindern 1 im Rahmen des modularen Systems ermöglicht ist.

Es versteht sich, daß die aus den Zeichnungen ersichtliche konkrete Gestalt des Eckverbinders 1 in Anpassung an den hier lediglich beispielhaft dargestellten Profilstab 2 erfolgt und vom Fachmann je nach Anforderung variiert werden kann.

Im Rahmen eines modularen Systems, bestehend aus Eckverbindern 1, Profilstäben 2 sowie Kupplungsteilen 4, 5 lassen sich nahezu beliebige Raumformen durch Aneinanderfügen der einzelnen Komponenten des modularen Systems schaffen.

## Patentansprüche

1. Eckverbinder zur Ausbildung einer Eckverbindung zwischen zwei winklig zueinander angeordneten Profilstäben (2), wobei der Eckverbinder (1) im wesentlichen L-förmig mit zwei Schenkeln (10, 11) ausgebildet ist und auf die freien Enden (100, 110) der Schenkel (10, 11) die Profilstäbe (2) endseitig aufschiebbar sind, **dadurch gekennzeichnet, daß** der Eckverbinder (1) im Bereich seiner Schenkel (10, 11) mit Einstecköffnungen (12, 13) ausgebildet ist, in die Kupplungsteile (4, 5) zum Verbinden mehrerer Eckverbinder (1) miteinander einsteckbar sind.

2. Eckverbinder nach Anspruch 1, **dadurch gekennzeichnet, daß** die Schenkel (10, 11) des Eckverbinders (1) einen Winkel (α) einschließen und die Einstecköffnungen (12, 13) auf der dem Winkel (α) abgewandten Seite der Schenkel (10, 11) ausgebildet sind.

3. Eckverbinder nach Anspruch 1 oder 2, **dadurch gekennzeichnet, daß** die Einstecköffnungen (12, 13) in Längserstreckung der Schenkel (10, 11) gesehen hintereinander und in gleichen Abständen auf den Schenkeln (10, 11) angeordnet sind.

4. Eckverbinder nach einem der Ansprüche 1 bis 3, **dadurch gekennzeichnet, daß** mindestens eine der Einstecköffnungen (12, 13) auf jedem Schenkel (10, 11) mit Rastmitteln zum verrastenden Einstecken eines Kupplungsteiles (4, 5) ausgebildet ist.

5. Eckverbinder nach einem der Ansprüche 1 bis 4, **dadurch gekennzeichnet, daß** über die Schenkel (10, 11) vorstehende Kernvorsprünge (101, 111) zum Eingreifen in eine Hohlkammer (20, 30) des Profilstabes (2) vorgesehen sind und im Bereich der freien Enden der Schenkel (10, 11) zwischen diesen und dem Kernvorsprung (101, 111) eine umlaufende Nut (15) zum stirnseitigen Einstecken des Profilstabes (2) ausgebildet ist.

6. Eckverbinder nach einem der Ansprüche 1 bis 5, **dadurch gekennzeichnet, daß** er aus zwei Verbinderhälften (1a, 1b) besteht, die zu einem Eckverbinder (1) zusammenfügbar sind.

7. Eckverbinder nach einem der Ansprüche 1 bis 6, **dadurch gekennzeichnet, daß** im Übergangsbereich zwischen den beiden Schenkeln (10, 11) eine Ausnehmung (14) zur Aufnahme eines Tragseiles ausgebildet ist.

8. Eckverbinder nach Anspruch 7, **dadurch gekennzeichnet, daß** in die Ausnehmung (14) die Kupplungsteile (4, 5) einsteckbar sind.

9. Eckverbinder nach einem der Ansprüche 1 bis 8, **dadurch gekennzeichnet, daß** als Kupplungsteil ein Kupplungsstift (4) vorgesehen ist, der jeweils mit einem seiner Enden in eine Einstecköffnung (12) eines Eckverbinders (1) einsteckbar ist.

10. Eckverbinder nach Anspruch 9, **dadurch gekennzeichnet, daß** der Kupplungsstift (4) mindestens zwei Enden zum Einstecken in Einstecköffnungen (12) von Eckverbindern (1) aufweist.

11. Eckverbinder nach einem der Ansprüche 1 bis 8, **dadurch gekennzeichnet, daß** als Kupplungsteil eine Kupplungsplatte (5) vorgesehen ist, auf deren Oberseite und/oder Unterseite Kupplungsbolzen (50, 51) vorstehen, die in die Einstecköffnungen (12, 13) von Eckverbindern (1) einsteckbar sind.

12. Eckverbinder nach Anspruch 11, **dadurch gekennzeichnet, daß** die Kupplungsplatte (5) von zwei konzentrisch angeordneten und durch Speichen (54) verbundenen Ringen (52, 53) gebildet ist, wobei auf dem Ring (52) mit dem größeren Durchmesser Kupplungsbolzen (50) zum Einstecken in Einstecköffnungen (12) des Eckverbinders (1) und auf dem Ring (53) mit dem kleineren Durchmesser Kupplungsbolzen (51) zum Einstecken in Einstecköffnungen (13) des Eckverbinders (1) angeordnet sind.

13. Eckverbinder nach Anspruch 12, **dadurch gekennzeichnet, daß** die Ringe (52, 53) mit Bohrungen (55, 56) ausgebildet sind, in denen die Kupplungsbolzen (50, 51) befestigbar sind.

14. Modulares System zur Ausbildung einer Eckverbindung, bestehend aus Eckverbindern (1), Profilstäben (2) und Kupplungsteilen (4, 5) gemäß einem der vorangehenden Ansprüche.
